# EUROPEAN PATENT SPECIFICATION

(11) **EP 2 194 691 B1**
(45) Date of publication and mention of the grant of the patent: **10.02.2016**
(21) Application number: 09013602.9
(22) Date of filing: 29.10.2009
(51) Int. Cl.: H04L 29/06, H04L 12/28

(54) **REMOTE ACCESS OF DRM PROTECTED INTERNET PROTOCOL (IP)-BASED CONTENT OVER AN IP MULTIMEDIA SUBSYSTEM (IMS)-BASED NETWORK**
FERNZUGRIFF AUF DRM GESCHÜTZTEN IP-BASIERTEN INHALT ÜBER EIN IMS-NETZWERK
ACCÈS À DISTANCE AU CONTENU PROTÉGÉ PAR DRM SUR UN RÉSEAU À BASE IMS

(30) Priority: 02.12.2008 US 326124
(43) Date of publication of application: 09.06.2010
(73) Proprietor: Motorola Mobility LLC, Libertyville, IL 60048 (US)
(72) Inventor: Peterka, Petr, San Diego California 92130 (US); Chintaba, Suresh Kumar, Bangalore 560093 (IN); Rajagopal, Priya, Michigan 48104 (US)
(74) Representative: Openshaw & Co.

(56) References cited:
- WO-A1-2008/108699
- US-A1- 2007 143 489

## Description

### BACKGROUND OF THE INTENTION

### Field of the Invention

The invention relates to digital rights management (DRM) in Internet, Protocol Multimedia Subsystem (IMS)-based networks. More particularly, the invention relates to remote access of protected content within IMS-based networks.

### Description of the Related Art

The IP Multimedia Subsystem (IMS) is an architectural framework for delivering Internet Protocol (IP) multimedia content to a variety of end user devices, including end user devices within customer premises networks, via connections between different types of access networks. The IP Multimedia Subsystem originally was developed by the wireless standards body Third-Generation Partnership Project (3GPP), and is part of the vision for "next-generation networks" (NGN), i.e., networks that go beyond those descended from the original mobile telecommunications standards by transporting all information and content using IP.

The delivery of television programming via an IP-based system generally is referred to as IP Television (IPTV). IPTV can take the form of a real-time streaming service reminiscent of traditional broadcast television, a "video on-demand" (VoD) service in which a service provider transmits IPTV content in response to specific subscriber requests, or other kinds of interactive television services. Regardless, it is desirable for IPTV services to include suitable digital rights management (DRM) and conditional access (CA) schemes so that access is restricted to authorized IPTV subscribers.

A DRM scheme or system typically is used to restrict access to the content to authorized subscribers. DRM schemes typically include encrypting the content to be transferred and providing the end user devices with one or more decryption keys for decrypting the transferred content. Conventional DRM systems and formats include Microsoft Corporation's Windows Media DRM, which is primarily used on computers; Motorola Inc.'s Internet Protocol (IP) Rights Management (IPRM), which was developed for the cable television industry and IP-based television services (IPTV); and several schemes promoted by the Open Mobile Alliance (OMA).

Service providers are upgrading their service delivery networks to IMS-based NGN networks. Various standards organizations are defining standards for IMS-based IPTV deployments. In view of this, IPTV services are to be delivered over IMS-based IPTV infrastructure. IMS-based IPTV deployments allow IPTV subscribers to be registered with multiple devices and provide infrastructure support to authenticate IPTV subscribers based on their public and/or private IMS identities. IMS-based IPTV deployments also can authorize user access to IPTV services based on IPTV profiles associated with the user.

The service and feature demands of users are driving content delivery technologies toward a vision of a connected home, in which broadband, Internet and wireless networks are seamlessly integrated through interoperable standards. Many network communication devices, including mobile (handheld) communication devices, are configured to operate within a network structure according to home networking protocols, such as a set of guidelines established by the Digital Living Network Alliance (DLNA) or the OMA. For instance, the DLNA guidelines were established to facilitate the interoperability of consumer electronics (CE) devices (e.g., set-top boxes), personal computer (PC) and other Internet devices, and mobile devices (e.g., mobile phones and personal digital assistants) within a home network to access and consume multimedia content. The DLNA guidelines include protocols that support many computer and Internet-based protocols, including universal plug and play (UPnP^{™}), which is a set of computer network protocols aimed at providing relatively seamless connection between devices, such as within one or more networks. For example, the DLNA framework supports UPnP audio-visual (AV) protocols for media control and management inside home networks.

Most conventional content protection systems, e.g., DRM systems and CA systems, currently are required to limit content sharing within the home network. Furthermore, content often is restricted by regions, e.g., sports blackouts and DVD region codes. A DRM domain typically is known as a secure binding of a small number of devices owned by an end user or end user household that are allowed to share content. However, conventionally, content providers or existing business models restrict a DRM domain generally to a limited number of devices that meet a certain "proximity" criterion. For example, only devices that are in the same location (e.g. same subnet) can be registered into the home domain, and content sharing is allowed only between these devices. Conventionally, different variants of these domain policies exist, and typically are established by the content provider.

As such, the ability to remotely access protected content within a home network effectively has been eliminated by the proximity requirements established by the content providers. Content providers often restrict remote access to protected content within a home network because of the relative lack of proper security infrastructure in place that would disallow unauthorized remote access. Also, content providers often restrict remote access to protected content within a home network because the home domain typically is autonomous, i.e., the content or service provider typically does not know what devices the user has added to the home network domain.

The ability for a user to remotely access content within the user's home network is increasingly becoming a service feature demanded by users, especially as multimedia applications for user mobile devices continue to increase. Accordingly, there is a need to extend the effective DRM domain to include remote or mobile devices. Although some of the capabilities for doing so may be limited by business relationships between content providers and service providers, these service domain relationships may become more integrated in the future, and such solutions may be more easily deployable and desirable. However, conventional home networking technologies, such as UPnP and DLNA, currently do not have the capability to determine a device location, therefore, content sharing is limited to local devices only, although IP multimedia subsystems may help in this regard by offering a location service and identifying multiple devices as belonging to the same user or account.

Thus, although work in the areas of DRM and conditional access continues to develop, relatively little conventional work involves the application of DRM and conditional access within a home network. Also, conventional work in the home networking area typically does not take into account the content protection aspect of the overall interactions. Therefore, conventional work in theses areas does not address the needs of remote access use cases that require the content protection services be deployed on the service provider NGN network, as well as the DRM solution within home networks to work together to enable secure delivery of content. Conventional work continues to involve proximity-based rules and requirements.

US 2007/143489 A1 discloses a device and method for seamlessly internetworking local area networks utilizing the Universal Plug and Play protocol with wide area networks utilizing the Internet Multimedia Subsystem architecture. The network communication device includes a universal plug and play (UPnP) interface and an Internet Protocol multimedia subsystem (IMS) interface. Circuitry is communicatively coupled to the UPnP interface and the IMS interface, wherein the circuitry associates an UPnP session key with an associated electronic equipment for allowing communication between the one or more associated devices and the associated electronic equipment.

Accordingly, there has been a need to provide a framework that would allow remote users to access protected content within their home network (e.g., a home DLNA/UPnP AV network) over an IMS-based IPTV network, while conforming to relevant DRM and conditional access restrictions associated with the content.

### BRIEF DESCRIPTION OF THE DRAWINGS

FIG. 1 is a block diagram of an Internet Protocol (IP) Multimedia Subsystem (IMS)-based network system in which protected IP-based content delivered to a home network can be accessed remotely;
FIG. 2 is a block diagram of a more detailed view of the IMS-based network of FIG. 1;
FIG. 3 is a block diagram of the Service Control application in FIG. 2; and
FIG. 4 is a flow chart that schematically illustrates a method for remotely accessing protected IP-based content delivered to a home network within an IMS-based network system.

### DETAILED DESCRIPTION

The present invention is defined by the subject-matter of the independent claims. Preferred embodiments are defined by the dependent claims.

In the following description, like reference numerals indicate like components to enhance the understanding of the remote access methods, systems and devices through the description of the drawings.

The methods, systems and devices described herein involve the secure, remote access of protected Internet Protocol (IP)-based content delivered over an IP multimedia subsystem (IMS)-based network to one or more devices within a home network, with appropriate protection of the content from unauthorized access. An IPTV subscriber purchases and downloads protected content over an IMS-based IPTV service provider network for recording and storage on an appropriate home network device, such as a UPnP-capable set-top box. Relevant DRM rights also are delivered as part of the content delivery to the subscriber's home network. Depending on the DRM rights associated with the content, the content may be shared with other devices in the subscriber's home network that also are members of an authorized domain, using appropriate content protection schemes.

The subscriber subsequently wants to view the protected content from a remote location outside of the home network, e.g., on a mobile or portable device that previously had been registered into the subscriber's home network domain using an appropriate registration scheme, e.g., when the portable device was physically located within the home network area. Using the portable device, the subscriber registers into the IMS-based network and is subject to appropriate IMS-based client authentication procedures. The subscriber then requests the IMS-based network for remote access to the protected content stored on one or more devices within the subscriber's home network.

A Service Control application can authorize access to the protected content by the portable device based on one or more suitable criteria, such as the particular DRM rights associated with the content, the subscription rights of the subscriber, the remote location of the portable device, the capabilities of the portable device, and both the portable device and the home network device belonging to the same subscriber account. Upon appropriate authorization, the Service Control application directs the IMS-based network to forward the subscriber request for the particular protected content to the appropriate home network device, e.g., via a home network gateway. The request includes appropriate information to allow the home network to relax its proximity authorization requirements and to allow an appropriate key exchange with the portable device. The home network, e.g., via a home network gateway, establishes an appropriate media delivery setup between the IPTV service provider content server, the particular home network device and the portable device. Upon receipt of an appropriate response to its initial content request, the portable device requests and receives the content keys from the home network device. The portable device uses the keys to decrypt the content that subsequently streams from the home network device to the portable device.

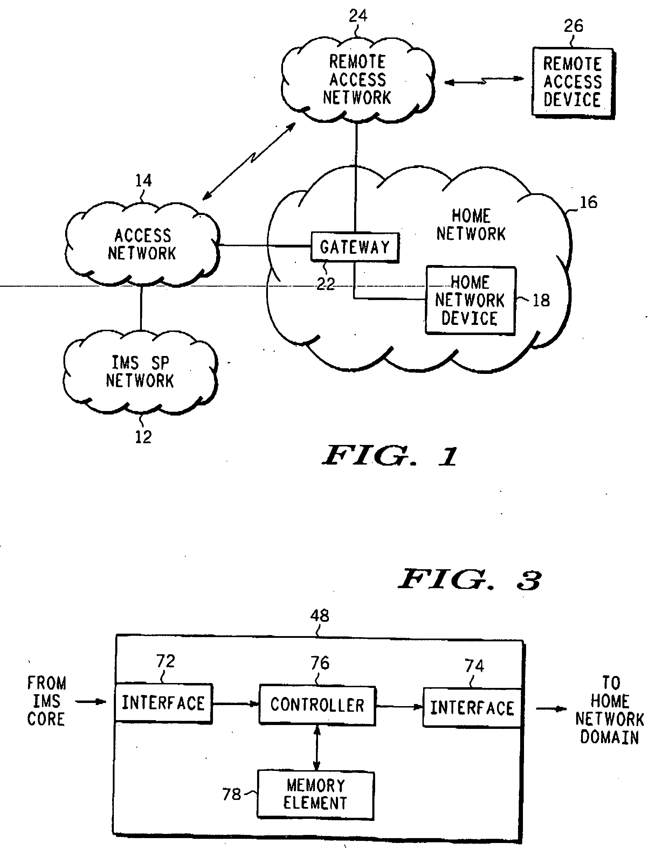

Referring now to FIG. 1, shown is a block diagram of an Internet Protocol (IP) Multimedia Subsystem (IMS)-based network system 10 in which protected IP-based content delivered to a home network can be accessed remotely with appropriate protection from unauthorized access. The system 10 can include an IMS-based service provider (SP) network 12, an access network 14 coupled to the IMS-based network 12, and a home network 16 coupled to the access network 14. The access network 14 can be any suitable network for delivering IP-based content from the IMS-based network 12 to the home network 16, such as a hybrid-fiber coax (HFC) network, a fiber to the premises (FTTP) network, a digital subscriber line (DSL), and/or a wireless broadband network.

The home network 16 can include one or more client or home network devices 18, such as a set-top box (STB) or other suitable customer premises equipment (CPE) within the home network 16. For example, one or more home network devices 18 can be set-top boxes, digital video recorders (DVRs), portable media players (PMPs), video-enabled game consoles, wireless handsets, residential gateways, personal computers, or any other suitable type of device capable of receiving IP-based content, including IPTV content, from a service provider network.

The home network device 18 can be coupled to the access network 14 directly or via a residential gateway (RG) 22 or other suitable home network gateway device. For example, the home network device 18 can be a DLNA-compatible UPnP AV device or an IMS/SIP (session initiation protocol)-capable device. If the home network device 18 is not an IMS/SIP-capable device, the home network device 18 can register and access the IMS-based network 12 via an IMS-based home residential gateway (RG). An IMS-enabled home network device 18 can be coupled directly to the IMS-based network 12, e.g., via the access network 14.

The system 10 also can include a remote access network 24 coupled to the home network 16 and coupled to the access network 14. The remote access network 24 allows a remote access device 26, such as a subscriber mobile or portable device, to communicate with the home network 16, e.g., via the gateway 22, and portions of the IMS-based network 12, e.g., via the access network 14. Typically, the remote access device 26 should be an IMS/SIP-capable device. For example, the remote access device 26 can be an IMS-enabled mobile handset. Alternatively, the remote access device can be a cellular telephone, a smart telephone, a personal digital assistant (PDA), a digital music player, a portable video player, a wireless handheld device, a digital camera, a mobile communication device, a laptop personal computer (PC), a notebook PC and a mobile computing device. Typically, within the system 10, the home network device 18 and the remote access device 26 should be associated with the same subscriber.

It should be noted that although the methods, systems and devices described herein relate to IPTV delivery, the same service provider can deliver additional services, such as voice over IlP telephony and Internet access, over the same IMS based network. Also, although in the methods, systems and devices described herein the IPTV content is delivered on demand, i.e., in response to specific user requests, such as a request to view a selected movie, the IPTV content can be selected by the provider and delivered in a continuously streamed manner reminiscent of a traditional television channel.

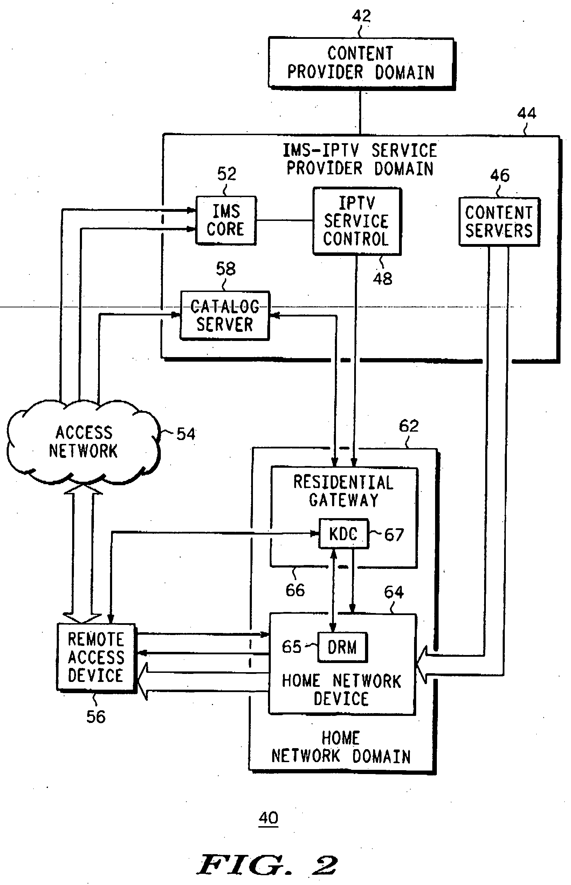

Referring now to FIG. 2, shown is a block diagram of a more detailed version of the IMS-based network system of FIG. 1, in which protected IP-based content delivered to a home network can be accessed remotely. In FIG. 2, the system 40 includes a content provider domain 42 coupled to an IMS-based IPTV service provider (SP) domain 44. The IMS-based IPTV SP domain 44 is the IPTV service provider who offers protected content over an IMS-based IPTV NGN infrastructure. The content provider domain 42 is the actual source of content to the service provider. Content from content providers is acquired, processed and re-distributed to one or more content servers 46 in the service provider network. The content servers 46 make the content available for downloading or streaming by the IPTV subscribers.

The IMS-based IPTV SP domain 44 also includes an IPTV service control application or element 48, and an IMS core element or component 52 coupled to the IPTV service control application 48. As will be discussed in greater detail hereinbelow, the service control application 48 is configured to authorize access to protected content by an appropriate subscriber remote access device based on one or more suitable criteria. The service control application 48 also is configured to direct the IMS-based network to forward subscriber remote access device requests for protected content to an appropriate device within a home network. The IMS core 52, which typically includes a registrar, is configured to register IPTV subscribers on a portable or remote access device 56, e.g., via an appropriate access network 54. The IMS core 52 also is configured to receive, e.g., via the access network 54, remote access requests from the subscriber's remote access device.

The IMS-based IPTV SP domain 44 also includes a catalog server 58, which is an infrastructure server that is configured to include and present a list of content purchased, downloaded and/or recorded by the IPTV subscriber. Alternatively, one or more home network devices can be configured to present the content directory directly, e.g., as a DLNA content directory service (CDS). Also, alternatively, the catalog server 58 can be configured as a DLNA CDS proxy.

Referring now to FIG. 3, shown is a block diagram of the service control application 48 in FIG. 2. The service control application 48 includes a first interface 72, a second interface 74, a controller 76 coupled between the first and second interfaces 72, 74, and a memory or data storage element 78 coupled to the controller 76.

The controller 76 generally processes instructions, remote access requests and other control information received by the service control application service control application 48. The controller 76 also provides appropriate authorization for access to protected content, including remote access to protected content, and forwards subscriber remote access requests for protected content to appropriate devices within the home network. The controller 76 also manages the movement of various instructions and control information to and from the data storage element 78. In addition to the data storage element 78, the service control application 48 can include at least one type of memory or memory unit (not shown) within the controller 76 and/or a storage unit or data storage unit coupled to the controller 76 for storing processing instructions and/or information received and/or created by the service control application 48.

The first interface 72 is configured to transmit and receive instructions, remote access requests and other control information to and from other components within the IMS-based IPTV SP domain 44, e.g., the IMS core 52. The second interface 74 also is configured to transmit and receive appropriate instructions, remote access requests and other control information to and from other components within the system 40, e.g., the home network. It should be understood that the interfaces 72, 74 can be a single input/output interface coupled to the controller 76. Also, it should be understood that one or more of the interfaces 72, 74 can be an interface configured to support more than one connection from more than one system component or device. The input and/or output interfaces 72, 74 are configured to provide any protocol interworking between the other components within the service control application 48 and the other components within the system 40 that are external to the service control application 48. Because all content distribution systems are not the same, the interfaces 72, 74 are configured to support the protocols of the particular system that is providing the content. Such protocol support functionality includes the identification of the content streams and corresponding protocol support required by the distribution system. Each distribution system typically will use a defined set of protocols.

One or more of the components within the service control application 48, including the interfaces 72, 74, the controller 76 and the data storage element 78, can be comprised partially or completely of any suitable structure or arrangement, e.g., one or more integrated circuits. Also, it should be understood that the service control application 48 includes other components, hardware and software (not shown) that are used for the operation of other features and functions of the service control application 48 not specifically described herein. Also, the service control application 48 can be partially or completely configured in the form of hardware circuitry and/or other hardware components within a larger device or group of components. Alternatively, the service control application 48 can be partially or completely configured in the form of software, e.g., as processing instructions and/or one or more sets of logic or computer code. In such configuration, the logic or processing instructions typically are stored in a data storage device (not shown). The data storage device typically is coupled to a processor or controller (not shown). The processor accesses the necessary instructions from the data storage device and executes the instructions or transfers the instructions to the appropriate location within the service control application 48.

Referring again to FIG. 2, the system 40 also includes a home network domain 62, which typically is an IPTV subscriber home or residential network that includes one or more home network devices 64, and possibly a residential gateway 66 coupled to the home network devices 64. The home network domain 62 also can be known as a DRM domain, an authorized service domain or a secure home domain. The home network devices 64 can include IMS and/or non-IMS capable devices present within the premises of the IPTV subscriber's home network. For example, suitable home network devices 64 include digital video recorders (DVRs) or media servers capable of storing media content downloaded and/or recorded from a content provider. Other suitable home network devices 64 can include a signal converter box, a signal decoder box, a digital video disk recorder, a personal video recorder device, a home media server, a digital video server, a video receiver and a computer. The home network domain 62 can include a DVR-capable residential gateway or any DVR-capable media device that sits behind the residential gateway 66 in the home network domain 62. Some or all of the home network devices 64 may be part of a DLNA home network. Typically, the home network devices 64 are registered with a key distribution center (KDC) 67, which is located within the residential gateway 66 or some other appropriate location within the home network domain 62, and which acts as the domain controller. In this manner, the registered home network devices 64 are part of the home network domain 62. Alternatively, the secure domain may be maintained by the IMS infrastructure.

The residential gateway 66 is a device within the home network that also acts as a gateway between the IMS-based IPTV SP network and the home network devices 64 within the home network domain 62. As discussed hereinabove, the residential gateway 66 may have DVR capabilities for downloading and caching content. The residential gateway 66 also can be configured to host a SIP/UPnP bridging system for enabling UPnP AV devices present in the home network to host media content to remote clients, such as mobile or portable remote access devices with IMS/SIP capability. Such remote access devices can discover and share media content stored on the one or more home network devices 64 via this bridge.

The home network device 64 typically includes appropriate DRM or other content protection applications or systems 65 that, along with the KDC 67, is responsible for protecting content that is delivered from the IPTV SP network to the home network device 64. In one embodiment of a DRM system, the KDC 67 is responsible for distributing tickets to provisioned clients to create and maintain the secure domain, and a key management system (KMS), which typically is co-located with the content, is responsible for distributing the content or service keys required for content decryption. Tickets delivered by the KDC 67 are used by clients to request content or service keys from the key management systems residing either on the home network device 64 as part of the DRM system 65, or on the residential gateway 66 as part of the KDC 67.

As discussed hereinabove, the remote access device 56 is an IMS-capable IPTV mobile or portable device that belongs to the IPTV subscriber of the home network from which protected content may be remotely accessed. The remote access device 56 also is registered with the KDC 67 of the subscriber's home network, and is considered to be part of the subscriber's home network domain 62. The IPTV subscriber is an IMS user who also subscribes to IPTV services offered by the IMS-based IPTV service provider. The IPTV subscriber may have multiple devices registered with the service provider, including home network devices and remote access devices.

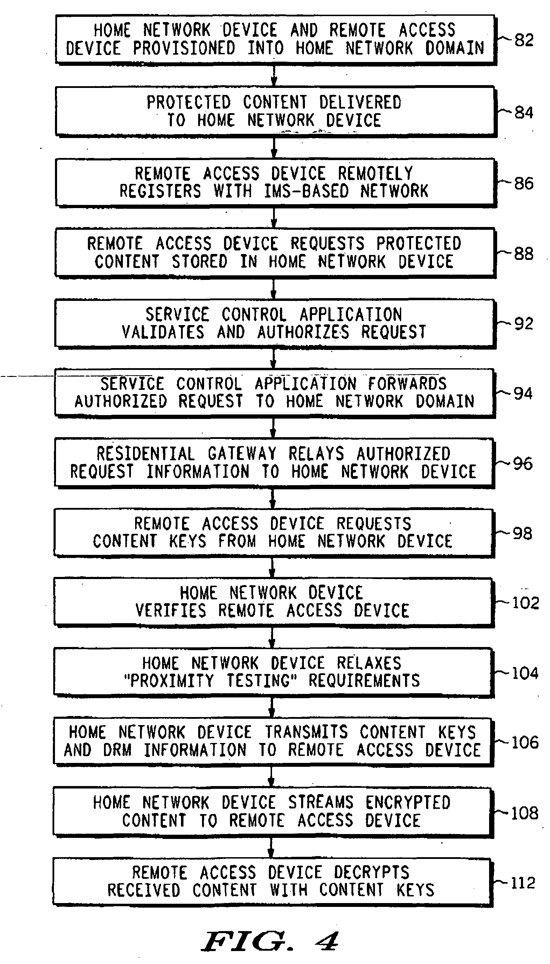

Referring now to FIG. 4, with continuing reference to FIG. 2, shown is a flow chart that schematically illustrates a method 80 for remotely accessing protected IP-based content delivered to a home network within an IMS-based network system. The method 80 will be discussed with reference to the IMS-based network system 40 shown in FIG. 2.

Several assumptions typically are associated with the method 80. First, the protected content from the IMS-based IPTV service provider should be downloaded to or otherwise stored on or accessible by the home network device. It is assumed that protected content that is to be downloaded is pre-encrypted and distributed to various content servers in the IMS-based IPTV service provider network and is available for consumption by the IPTV subscriber. Alternatively, a real-time encrypted live television content stream can be recorded on the home network device, e.g., a DVR, and protected by the local DRM system in the home network.

Also, it is assumed that the IMS-based IPTV service provider has deployed an appropriate DRM or CA content protection system or application to prevent unauthorized receipt or downloading of protected content from content servers in the service provider network. Such DRM protection system is deployed in the home network to prevent unauthorized consumption of protected content across devices within the home network domain or unauthorized redistribution of protected content outside of the home network domain. Alternatively, the content protection system delivering the content to the home network may be different from the content protection system protecting the content within the home network being shared with other devices belonging to the secure home domain.

Another assumption is that the IPTV subscriber has provisioned and registered the appropriate home network devices and remote access devices with the KDC in the home network. Accordingly, all devices registered and provisioned with the KDC in the home network are considered part of the home network domain and are issued tickets that the devices subsequently can use to retrieve the content or service keys from DRM-enabled server devices. Typically, provisioning and registration of a device to the home domain happens while the device is present locally in the home network.

The method 80 includes a step 82 of the home network device 64 and the remote access device 56 registering with or being provisioned into the home network domain 62. Typically, all devices belonging to the IPTV subscriber or the household are provisioned into a secure home domain, which sometimes is called an authorized domain. The provisioning step 82 can be restricted to devices in proximity, i.e., devices typically can not join the authorized domain remotely. Therefore, typically, the remote access device should be local to or physically located within the household to be provisioned into the home network domain 62. The IMS infrastructure may or may not be fully aware of the home network domain because the home network domain may be managed locally by the KDC 67 within the home network domain 62. It should be noted that the home network domain 62 can be identified by a unique domain ID, which, in turn, may be shared among all devices within the home network domain 62 as one of IMS public identities of each device.

The method 80 also includes a step 84 of the content server 46 downloading, streaming or otherwise providing protected content to the home network device 64. The delivery of protected content to the home network device 64 is not part of the remote access process, as an IPTV subscriber can have protected content securely downloaded to and recorded on a home network device for playback only on that particular network device or other local devices within the home network domain. As discussed hereinabove, the home network device can be IMS-capable, and therefore can connect directly to the service provider network. Alternatively, if the home network device is not IMS-capable, the home network device can connect to the service provider network via an IMS-based residential gateway device.

The downloaded protected content may be accompanied by relevant DRM rules that also define how the content may be shared, and any associated remote access rules. For example, remote access of the downloaded protected content may be limited by blackout areas. The downloaded protected content typically is stored in encrypted form on the home network device, and is available for replay by the home network device. As will be discussed in greater detail hereinbelow, such downloaded protected content also may be remotely-accessible.

If the home network includes a residential gateway 66, the protected content may be downloaded and cached in the residential gateway itself, from where the content is relayed to other home network devices over a DLNA network or other appropriate local network protocol. Alternatively, if the home network does not include a residential gateway 66, the protected content may be downloaded to and stored directly in the home network device. In either case, content keys and rights associated with the protected content typically are stored and protected on the home network device on which the content is available.

The method 80 also includes a step 86 of the remote access device 56 remotely registering with the IMS-based network. For example, the IPTV subscriber physically leaves the home network location with a mobile or portable remote access device 56 and now would like to access the previously-downloaded protected content remotely via the remote access device 56. The IPTV subscriber can connect to the IPTV SP network remotely with the remote access device 56 via any suitable access network 54. The IPTV subscriber can register the remote access device 56 with the IMS-based service network and is appropriately provisioned into the IMS service provider network after appropriate authentication procedures. Such authentication may include HTTP Digest authentication, IMS-AKA (IP Multimedia Subsystem-Authentication and Key Agreement) authentication or any other suitable authentication scheme as deployed by the service provider.

The method 80 also includes a step 88 of the remote access device 56 requesting protected content stored in the home network device 64. Once the IPTV subscriber registers the remote access device 56 with the IPTV SP network, the IPTV subscriber can use the remote access device 56 to access the catalog server 58 and browse the service provider catalog. The catalog server 58 either maintains a list of purchased or rented content associated with the subscriber or communicates appropriately with the subscriber's home network to obtain a list of content previously downloaded and stored within the subscriber's home network. The IPTV subscriber then can select from among such content. Alternatively, the IPTV subscriber, via the remote access device 56, can browse a content directory service presented by one of the home network devices, e.g., a DVR with stored content or the residential gateway 66. The service provider catalog may be a proxy for the home network content metadata.

Once the IPTV subscriber has selected content from the home network for remote access by the remote access device 56, the IPTV subscriber can use the remote access device 56 to send a remote access request, e.g., an SIP INVITE request, for the selected content to the IMS-based IPTV SP network. The IMS core 52 within the IMS-based IPTV SP network receives the remote access request, e.g., via the access network 54, and routes the remote access request to the service control application 48, which, as discussed hereinabove, is configured to receive, process and ultimately authorize or not authorize such remote access requests, including SIP INVITE requests.

The method 80 also includes a step 92 of the service control application 48 validating and authorizes the content request. The service control application 48 validates the received remote access (e.g., SIP INVITE) request and determines whether or not the remote access to the requested content is authorized. To determine proper validation and authorization, the service control application 48 may use profile information associated with the IPTV subscriber, which information can be located in and/or made available by a user profile database (not shown) that provides information on authenticated subscribers along with details on IPTV service profiles of the authenticated subscribers. For example, such information can indicate whether or not the particular IPTV subscriber signed up and paid for remote access and/or whether or not the particular remote access device 56 being used by the IPTV subscriber has been enabled for remote access.

The service control application 48 also is configured to identify the location of the remote IPTV subscriber (e.g., the local region, GPS position and/or country) and remote access device 56 from information contained in the SIP INVITE request received by the service control application 48. Alternatively, the service control application 48 can query the Network Attachment Subsystem (NASS) or other suitable location service for such location identification information.

Also, the service control application 48 can use the DRM rules associated with the requested content to determine whether or not the remote access of such content is allowed. For example, the use of DRM rules may be applicable to video on demand (VOD) content that has been downloaded to a home network device and the service control application 48 has access to the content DRM rules. In such case, the service control application 48 may interact with one or more content protection servers in the IMS based IPTV SP network. Based on the credentials of the IPTV subscriber, the remote location of the IPTV subscriber, and the DRM rules associated with the requested content, the service control application 48 typically can determine whether or not the remote access request is authorized.

Alternatively, if the IMS infrastructure does not have access to the DRM rules for the requested content, the service control application 48 can delegate the authorization function to the home network device that enforces the DRM rules associated with the recorded or downloaded content. In such case, the DRM rules may be set forth in the content's copy control information (CCI) or extended copy control information (ExCCI). In either case, the remote access request should include information that identifies the content (e.g., content ID), the remote device identity (e.g., remote access device ID), possibly an association with the particular home network domain (e.g., domain ID), and the device location (e.g., directly, by providing GPS coordinates, or indirectly, by the IMS system determining the location of the device).

The method 80 also includes a step 94 of the service control application 48 forwarding an authorized remote access request from the remote access device 56 to the home network domain 62. If the service control application 48 authorizes the remote access received from the remote access device, the service control application 48 forwards the authorized remote access request to the home network domain 62. Such forwarding may include an express permission to allow remote access of the requested content. Alternatively, remote access of the requested content may be implied based on the remote access request being forwarded to the home network domain 62. The transmission protocol transactions involved in this step 94 typically are secured to prevent unauthorized modification of the request information.

The method 80 can include a step 96 of the residential gateway 66 relaying an authorized remote access request to the home network device 64. If the home network includes a residential gateway 66 and the home network device 64 sits behind the residential gateway 66 in the home network configuration, the authorized remote access request forwarded from the service control application 48 to the home network can be terminated in the residential gateway 66. The residential gateway 66 can then relay the appropriate information in the authorized remote access request to the particular home network device 64.

For example, if the home network device 64 is a DLNA-capable device and the authorized remote access request is an SIP INVITE request, the residential gateway 66 can relay the appropriate information in the authorized SIP INVITE request to the particular home network device 64 using an SIP-DLNA bridge between the residential gateway 66 and the home network device 64. Such an SIP-DLNA bridge is configured to interpret the SIP INVITE request in a manner that extracts the identity of the selected content, e.g., the content's uniform resource identifier (URI), and the identity of the content's media server. The residential gateway 66 can then use UPnP procedures to obtain media from the selected content's media server and relay such media to the appropriate home network device via the home network residential gateway.

The receipt of the remote access request by the home network device 64 is an indication to the DRM system 65 within the home network device 64 that the request for remote access of the selected content has been appropriately validated and authorized by the service provider network, i.e., by the service control application 48. As discussed hereinabove, the remote access request can include the particular location of the remote access device 56, thus allowing the DRM rules associated with the selected content to be examined for any blackout or regional restrictions. The service control application 48 may assist the DRM system 65 on the home network device 64 by providing extra information that is not available to the home network device 64 (e.g., location) to enable the remote access that otherwise would be disallowed. The service control application 48 can enforce additional content access policies that are beyond the capabilities of the DRM system 65. For example, service control application 48 can check the subscriber profile to determine whether the remote access service has been enabled.

The method 80 also includes a step 98 of the remote access device 56 requesting content keys from the home network device 64. Once the remote access request is successfully acknowledged, e.g., via an SIP INVITE reply message, the remote access device 56 requests from the DRM system 65 of the home network device 64 content keys for decrypting the selected content.

The method 80 also includes a step 102 of the home network device 64 verifying the remote access device 56. Upon the home network device 64 receiving a content key request from the remote access device 56, the DRM system 65 within the home network device 64 can perform a number of verification processes. For example, the DRM system 65 can verify the domain membership of the remote access device 56. Such domain membership verification typically is applicable if the domain membership of the remote access device is required for remote access. Also, the DRM system 65 examines the DRM rules associated with the requested content. Also, the DRM system 65 can compare the identity of the remote access device 56 against the device ID of the initial remote access request. If the DRM system 65 determines that enough conditions are met for positive verification, the DRM system 65 verifies the remote access device 56 in an appropriate manner. For example, the DRM system 65 verifies the domain membership of the remote access device 56; and the DRM system 65 compares the location of the remote access device 56 against any blackout or regional restrictions listed in the content DRM license.

For example, the method 80 can include a step 104 of turning off or relaxing proximity requirements of the home network. If the DRM system 65 verifies the remote access device 56, the DRM system 65 can relax or "turn off" any requirements that the remote access device (or any other home network device) be physically located within the home network domain to be granted access to content downloaded to or stored in another home network domain device. Relaxing such proximity requirements can allow the remote access device 56 to access content stored in the home network device 64.

The method 80 also includes a step 106 of the home network device 64 transmitting content keys and DRM information to the remote access device 56. In response to the step 98 of the remote access device 56 requesting content keys from the home network device 64 and in response to the step 102 of the DRM system 65 verifying the remote access device 56, the home network device 64 can transmit appropriate content keys for decrypting the selected content that is to be remotely accessed by the remote access device 56 from the home network device 64. As part of the transmitting step 106, the home network device 64 also can transmit DRM information and/or CCI information corresponding to or associated with the selected content to be remotely accessed. This transmission can be performed using a specific DRM protocol, such as the IPRM Electronic Security Broker (ESB) protocol.

The method 80 also includes a step 108 of the home network device 64 streaming encrypted content to the remote access device 56. Once the DRM system 65 has verified the remote access device 56, and any proximity requirements have been relaxed or turned off, the protected content stored in the home network device 64 is accessible by the remote access device 56. The selected content typically is encrypted by the DRM system 65 to prevent unauthorized viewing. The content-streaming session from the home network device 64 to the remote access device 56 can be controlled by any appropriate protocol, based on the session established using the remote access request. For example, the-content-streaming session can be controlled by the real time streaming protocol (RTSP).

The method 80 also includes a step 112 of the remote access device 56 decrypting the protected content received thereby from the home network device 64. The encrypted content transmitted by the home network device 64 to the remote access device 56 is decrypted using the content keys within the remote access device 56. As discussed hereinabove, appropriate content keys for decrypting the protected content streamed to the remote access device 56 from the home network device 64 were transmitted to the remote access device 56 as part of the transmission step 106.

The methods, systems and devices described herein leverage the authentication and authorization infrastructure available in IMS-based IPTV SP networks and also remote device location information to indicate to the DRM system in the home network to turn off or relax any DRM requirements, including proximity DRM requirements, while processing remote access key requests. The IMS infrastructure may perform additional checks, such as whether the IPTV subscriber has subscribed to the remote access feature. Also, the content service provider may keep additional DRM rules that were not delivered to the DRM system in the home network due to limitations in the conditional access (CA) system used to protect the IPTV content.

The methods, systems and devices described herein allow IPTV content delivered via remote access over IMS-based NGN networks to be protected from unauthorized access. IMS-based IPTV authentication and authorization infrastructure is leveraged to validate or preauthorize remote access. The results of this authorization is conveyed to the content protection system deployed in the home network, which can use this extra level of security to determine if proximity testing for remote access should be turned off or relaxed. In this manner, the methods, systems and devices described herein allow "terminal mobility," wherein IPTV subscribers can access protected content on a variety of devices, including "fixed" home network devices and mobile or portable remote access devices. Also, conventional location services offered by the IMS-based IPTV service provider and/or location information obtained via IMS network attachment procedures can be used to convey location information to the content protection system deployed in the home network. The home network can use this location information to determine if regional blackouts are applicable.

The residential gateway may act as the key distribution center for the establishment of an authorized home domain. The residential gateway also may share the identification of the home domain with the IMS infrastructure. The IMS infrastructure can add the home domain identification to its user profile database, or use the home domain identification as another IMS public identity associated with all devices owned by the same user or associated with the same account. Also, the IMS system may assist or authorize the inclusion of individual devices into the home domain, e.g., based on an association with a single subscriber account.

The methods, systems and devices described herein are relatively flexible, thus allowing remote access to protected content in the home network that may be located in an IMS-based residential gateway, an IMS-capable home network device or in any other DLNA-capable media server in the home network. In DLNA-capable media servers, the SIP-DLNA bridging element in the residential gateway can be used to convey content if the request for the content was successfully authorized by the IMS-SP network. The SIP-DLNA bridging element can provide a virtual SIP address for the DLNA devices, which can be provisioned on the remote access device.

The method shown in FIG. 4 may be implemented in a general, multi-purpose or single purpose processor. Such a processor will execute instructions, either at the assembly, compiled or machine-level, to perform that process. Those instructions can be written by one of ordinary skill in the art following the description of FIG. 4 and stored or transmitted on a computer readable medium. The instructions may also be created using source code or any other known computer-aided design tool. A computer readable medium may be any medium capable of carrying those instructions and includes random access memory (RAM), dynamic RAM (DRAM), flash memory, read-only memory (ROM), compact disk ROM (CD-ROM), digital video disks (DVDs), magnetic disks or tapes, optical disks or other disks, silicon memory (e.g., removable, non-removable, volatile or non-volatile), packetized or non-packetized wireline or wireless transmission signals.

## Claims

1. A service control method for allowing remote access to digital rights management protected content provided to at least one of a home network device (18) within a home network (16) from an internet protocol multimedia subsystem-based, IMS-based, IP television, IPTV, service provider network (12), the method comprising the steps of:
receiving a remote access request for remote access, to at least a portion of the digital rights management, DRM, protected content from a remote access device (26) registered with the home network (16), wherein the remote access request is received from a remote location outside of the home network (16);
authorizing remote access, by a controller, by the remote access device (26) of the DRM protected content provided to the home network device, wherein the controller resides at the IMS-based IPTV service provider network (12) and outside the home network (16); and
forwarding the remote access request to the home network (16) when the remote access request has been authorized,
wherein the remote access request includes instructions to allow DRM protected content requested by the remote access request to be transmitted from the home network device (18) in the home network (16) to the remote access device (26).

2. The method as recited in claim 1, wherein the instructions to allow protected content requested by the remote access request to be transmitted from the home network device (18) include instructions for relaxing proximity authorization requirements of the home network (16) in such a way that content can be transmitted from the home network device (18) to the remote access device (26) when the remote access device (26) is located outside of the home network (16).

3. The method as recited in claim 1, wherein authorization of the remote access request is based on at least one of DRM rights associated with the content requested, the subscription rights of the subscriber associated with the home network device (18) and the remote access device (26), the remote location of the remote access device (26), capabilities of the remote access device (26), and that both the remote access device (26) and the home network device (18) belonging to a same subscriber account.

4. The method as recited in claim 1, wherein the authorizing step includes identifying the location of the remote access device (26).

5. The method as recited in claim 1, wherein the remote access request includes instructions to allow key exchanges between the home network (16) and the remote access device (26) that permit the remote access device (26) to decrypt content encrypted and transmitted from the home network device (18) to the remote access device (26).

6. The method as recited in claim 1, wherein the step of authorizing remote access by the remote access device (26) is based on subscriber profile information associated with the subscriber.

7. The method as recited in claim 1, wherein the home network device (18) includes a DRM scheme that is configured to verify that the remote access device (26) is part of the same home network domain as the home network device (18), and that the remote access device (26) is the same device that transmitted the remote access request to the service provider network (12).

8. The method as recited in claim 1, wherein the authorizing step includes delegating at least a portion of the authorization process in the authorizing step to at least one of the home network (16) and the home network device (18).

9. The method as recited in claim 1, wherein the home network (16) includes a residential gateway coupled between the IMS-based IPTV service provider network (12) and the home network device (18), and wherein the forwarding step includes forwarding the remote access request to the residential gateway and the residential gateway relaying at least a portion of the remote access request to the home network device (18).

10. The method as recited in claim 1, wherein the remote access request can include at least one of information that identifies the protected content requested, information that identifies the remote access device (26), and information that identifies the home network (16).

11. The method as recited in claim 1, wherein the IMS-based IPTV service provider network (12) includes a catalog server coupled to the home network (16) and coupled to the remote access device (26) that is configured to provide a list of content from which the protected content is selected.

12. A service control device for allowing remote access to digital rights management, DRM, protected content provided to at least one of a home network device (18) within a home network (16) from an internet protocol multimedia subsystem-based, IMS-based, IP television, IPTV, service provider network (12), the service control device comprising:
a controller configured to receive remote access request information from a remote access device (26) located outside of the home network (16) and registered with the home network (16), wherein the remote access request information includes a request for remote access to the DRM protected content provided to the at least one home network device (18); and
a memory element coupled to the controller for storing at least a portion of the remote access request information received by the service control device,
wherein the controller is configured to authorize remote access of the DRM protected content provided to at least one of the home network device (18) by the remote access device (26), further wherein the controller resides at the IMS-based IPTV service provider network (12) and outside the home network (16),
wherein the controller is configured to forward at least a portion of the remote access request information to the home network (16) when the remote access request has been authorized, and
wherein the remote access request information includes instructions to allow protected content requested by the remote access request to be transmitted from the home network device (18) in the home network (16) to the remote access device (26).

13. The device as recited in claim 12, wherein the instructions to allow protected content requested by the remote access request to be transmitted from the home network device (18) include instructions for relaxing proximity authorization requirements of the home network (16) in such a way that content can be transmitted from the home network device (18) to the remote access device (26) when the remote access device (26) is located outside of the home network (16).

14. The device as recited in claim 12, wherein the controller is configured to authorize remote access of the protected content by the remote access device (26) based on at least one of DRM rights associated with the content requested, the subscription rights of the subscriber associated with the home network device (18) and the remote access device (26), the remote location of the remote access device (26), capabilities of the remote access device (26), and that both the remote access device (26) and the home network device (18) belonging to a same subscriber account.

15. The device as recited in claim 12, wherein the controller is configured to identify the location of the remote access device (26), and wherein the controller is configured to authorize remote access of the protected content by the remote access device (26) based on the location of the remote access device (26).

16. The device as recited in claim 12, wherein the controller is configured to authorize remote access of the protected content by the remote access device (26) based on subscriber profile information associated with the subscriber.

17. The device as recited in claim 12, wherein the controller is configured to delegate at least a portion of the authorization process to at least one of the home network (16) and the home network device (18).

18. A computer readable medium storing instructions that, when executed on a programmed processor, carry out a method for allowing remote access to digital rights management, DRM, protected content provided to at least one of a home network device (18) within a home network (16) from an internet protocol multimedia subsystem-based, IMS-based, IP television, IPTV, service provider network (12), the computer readable medium comprising:
instructions for receiving a remote access request for remote access to at least a portion of the DRM protected content from a remote access device (26) registered with the home network (16), wherein the remote access request is received from a remote location outside of the home network (16);
instructions for authorizing remote access by the remote access device (26) of the DRM protected content provided to the home network device (18), wherein instructions are stored at the computer readable medium which resides at the IMS-based IPTV service provider network (12) and outside the home network (16); and
instructions for forwarding the remote access request to the home network (16) when the remote access request has been authorized,
wherein the remote access request includes instructions to allow protected content requested by the remote access request to be transmitted from the home network device (18) in the home network (16) to the remote access device (26), and
wherein the remote access request includes instructions to allow key exchanges between the home network (16) and the remote access device (26) that permit the remote access device (26) to decrypt content encrypted and transmitted from the home network device (18) to the remote access device (26).

19. The computer readable medium as recited in claim (18), wherein the instructions to allow protected content requested by the remote access request to be transmitted from the home network device (18) include instructions for relaxing proximity authorization requirements of the home network (16) in such a way that content can be transmitted from the home network device (18) to the remote access device (26) when the remote access device (26) is located outside of the home network (16).

20. The computer readable medium as recited in claim (18), wherein the instructions for authorizing the remote access request is based on at least one of DRM rights associated with the content requested, the subscription rights of the subscriber associated with the home network device (18) and the remote access device (26), the remote location of the remote access device (26), capabilities of the remote access device (26), and that both the remote access device (26) and the home network device (18) belonging to a same subscriber account.

## Patentansprüche

1. Dienst-Steuerungsverfahren zum Erlauben von Fernzugriff auf DRM-geschützten Inhalt, der an mindestens eine von einer Heimnetzwerkvorrichtung (18)
innerhalb eines Heimnetzwerks (16) von einem Internetprotokoll-Multimedia-Subsystem-basierten, IMS-basierten, Internet-Fernsehen- , IPTV, -Dienstanbieternetzwerk (12) bereitgestellt wird, wobei das Verfahren die Schritte umfasst:
Empfangen einer Fernzugriffsanforderung für den Fernzugriff auf mindestens einen Abschnitt des geschützten digitalen Rechtemanagement-, DRM, -Inhaltes von einer Fernzugriffsvorrichtung (26), die an dem Heimnetzwerk (16) registriert ist, wobei die Fernzugriffsanforderung von einem entfernten Standort außerhalb des Heimnetzwerks (16) empfangen wird;
Autorisieren des Fernzugriffs des DRM-geschützten Inhaltes durch eine Steuerung durch die Fernzugriffsvorrichtung (26), der an die Heimnetzwerkvorrichtung bereitgestellt wird, wobei sich die Steuerung bei dem IMS-basierten IPTV-Dienstanbieternetzwerk (12) und außerhalb des Heimnetzwerks (16) befindet; und
Weiterleiten der Fernzugriffsanforderung an das Heimnetzwerk (16), wenn die Fernzugriffsanforderung autorisiert wurde,
wobei die Fernzugriffsanforderung Befehle umfasst, um zu ermöglichen, dass DRM-geschützter Inhalt, der von der Fernzugriffsanforderung angefordert wird, von der Heimnetzwerkvorrichtung (18) in dem Heimnetzwerk (16) zu der Fernzugriffsvorrichtung (26) gesendet wird.

2. Verfahren nach Anspruch 1, wobei die Befehle zum Erlauben, dass geschützter Inhalt, der von der Fernzugriffsanforderung angefordert wird, von der Heimnetzwerkvorrichtung (18) gesendet werden darf, Befehle umfassen, um Näherungsautorisierungsanforderungen des Heimnetzwerks (16) auf solche Art und Weise zu lockern, dass Inhalt von der Heimnetzwerkvorrichtung (18) zur Fernzugriffsvorrichtung (26) gesendet werden kann, wenn sich die Fernzugriffsvorrichtung (26) außerhalb des Heimnetzwerks (16) befindet.

3. Verfahren nach Anspruch 1, wobei die Autorisierung der Fernzugriffsanforderung auf mindestens einem von DRM-Rechten, die mit dem angeforderten Inhalt verbunden sind, den Bezugsrechten des Teilnehmers, der mit der Heimnetzwerkvorrichtung (18) und der Fernzugriffsvorrichtung (26) verbunden ist, dem entfernten Standort der Fernzugriffsvorrichtung (26), Fähigkeiten der Fernzugriffsvorrichtung (26), und dass sowohl die Fernzugriffsvorrichtung (26) als auch die Heimnetzwerkvorrichtung (18) zu einem gleichen Teilnehmerkonto gehören, basiert.

4. Verfahren nach Anspruch 1, wobei der Autorisierungsschritt das Identifizieren des Ortes der Fernzugriffsvorrichtung (26) umfasst.

5. Verfahren nach Anspruch 1, wobei die Fernzugriffsanforderung Befehle umfasst, um Schlüsselaustauschvorgänge zwischen dem Heimnetzwerk (16) und der Fernzugriffsvorrichtung (26) zu ermöglichen, die der Fernzugriffsvorrichtung (26) erlauben, Inhalt zu entschlüsseln, der von der Heimnetzwerkvorrichtung (18) verschlüsselt und zur Fernzugriffsvorrichtung (26) gesendet wird.

6. Verfahren nach Anspruch 1, wobei der Schritt des Autorisierens des Fernzugriffs durch die Fernzugriffsvorrichtung (26) auf den Profilinformationen des Teilnehmers basiert, die mit dem Teilnehmer verbunden sind.

7. Verfahren nach Anspruch 1, wobei die Heimnetzwerkvorrichtung (18) ein DRM-Schema umfasst, das konfiguriert ist, zu verifizieren, dass die Fernzugriffsvorrichtung (26) Teil der gleichen Heimnetzwerkdomäne wie die Heimnetzwerkvorrichtung (18) ist, und dass die Fernzugriffsvorrichtung (26) die gleiche Vorrichtung ist, die die Fernzugriffsanforderung zu dem Dienstanbieternetzwerk (12) gesendet hat.

8. Verfahren nach Anspruch 1, wobei der Autorisierungsschritt das Delegieren von mindestens einem Abschnitt des Autorisierungsprozesses in dem Autorisierungsschritt zu mindestens einem von dem Heimnetzwerk (16) und der Heimnetzwerkvorrichtung (18) umfasst.

9. Verfahren nach Anspruch 1, wobei das Heimnetzwerk (16) ein lokales Gateway umfasst, das zwischen dem IMS-basierten IPTV-Dienstanbieternetzwerk (12) und der Heimnetzwerkvorrichtung (18) gekoppelt ist, und wobei der Weiterleitungsschritt das Weiterleiten der Fernzugriffsanforderung zu dem lokalen Gateway umfasst und das lokale Gateway mindestens einen Abschnitt der Fernzugriffsanforderung an die Heimnetzwerkvorrichtung (18) weiterleitet.

10. Verfahren nach Anspruch 1, wobei die Fernzugriffsanforderung mindestens eines aus Informationen, die den angeforderten geschützten Inhalt identifizieren, Informationen die die Fernzugriffsvorrichtung (26) identifizieren, und Informationen die das Heimnetzwerk (16) identifizieren, umfassen kann.

11. Verfahren nach Anspruch 1, wobei das IMS-basierte IPTV-Dienstanbieternetzwerk (12) einen Katalogserver umfasst, der mit dem Heimnetzwerk (16) und mit der Fernzugriffsvorrichtung (26) gekoppelt und konfiguriert ist, eine Liste von Inhalt bereitzustellen, aus der der geschützte Inhalt ausgewählt wird.

12. Dienst-Steuervorrichtung für das Erlauben von Fernzugriff auf DRM-geschützten Inhalt, der mindestens an eine von einer Heimnetzwerkvorrichtung (18) innerhalb eines Heimnetzwerks (16) von einem Internetprotokoll-Multimedia-Subsystem-basierten, IMS-basierten, Internet-Fernsehen-, IPTV, -Dienstanbieternetzwerk (12) bereitgestellt wird, wobei die Dienst-Steuervorrichtung umfasst:
eine Steuerung, die konfiguriert ist Fernzugriffsanforderungsinformationen von einer Fernzugriffsvorrichtung (26), die sich außerhalb des Heimnetzwerks (16) befindet und an dem Heimnetzwerk (16) registriert ist, zu empfangen, wobei die Fernzugriffsanforderungsinformationen eine Anforderung für den Fernzugriff auf DRM-geschützten Inhalt umfassen, der an die mindestens eine Heimnetzwerkvorrichtung (18) bereitgestellt wird; und
ein Speicherelement, das mit der Steuerung gekoppelt ist, um mindestens einen Abschnitt der Fernzugriffsanforderungsinformationen zu speichern, die von der Dienst-Steuervorrichtung empfangen werden, wobei die Steuerung konfiguriert ist, Fernzugriff auf DRM-geschützten Inhalt zu autorisieren, der mindestens an eine von der Heimnetzwerkvorrichtung (18) durch die Fernzugriffsvorrichtung (26) bereitgestellt wird, wobei sich die Steuerung weiter bei dem IMS-basierten IPTV-Dienstanbieternetzwerk (12) und außerhalb des Heimnetzwerks (16) befindet,
wobei die Steuerung konfiguriert ist, mindestens einen Abschnitt der Fernzugriffsanforderungsinformationen zum Heimnetzwerk (16) weiterzuleiten, wenn die Fernzugriffsanforderung autorisiert wurde, und
wobei die Fernzugriffsanforderungsinformationen Befehle umfassen, um zu ermöglichen, dass geschützter Inhalt, der von der Fernzugriffsanforderung angefordert wird, von der Heimnetzwerkvorrichtung (18) in dem Heimnetzwerk (16) zu der Fernzugriffsvorrichtung (26) gesendet werden darf.

13. Vorrichtung nach Anspruch 12, wobei die Befehle zum Erlauben, dass geschützter Inhalt, der von der Fernzugriffsanforderung angefordert wird, von der Heimnetzwerkvorrichtung (18) gesendet werden darf, Befehle umfasst, um Näherungsautorisierungsanforderungen des Heimnetzwerks (16) auf solche Art und Weise zu lockern, dass Inhalt von der Heimnetzwerkvorrichtung (18) zur Fernzugriffsvorrichtung (26) gesendet werden kann, wenn sich die Fernzugriffsvorrichtung (26) außerhalb des Heimnetzwerks (16) befindet.

14. Vorrichtung nach Anspruch 12, wobei die Steuerung konfiguriert ist, Fernzugriff auf den geschützten Inhalt durch die Fernzugriffsvorrichtung (26) basierend auf mindestens einem von DRM-Rechten, die mit dem angeforderten Inhalt verbunden sind, den Bezugsrechten des Teilnehmers, der mit der Heimnetzwerkvorrichtung (18) und der Fernzugriffsvorrichtung (26) verbunden ist, dem entfernten Standort der Fernzugriffsvorrichtung (26), Fähigkeiten der Fernzugriffsvorrichtung (26), und dass sowohl die Fernzugriffsvorrichtung (26) als auch die Heimnetzwerkvorrichtung (18) zu einem gleichen Teilnehmerkonto gehören zu autorisieren.

15. Vorrichtung nach Anspruch 12, wobei die Steuerung konfiguriert ist, den Ort der Fernzugriffsvorrichtung (26) zu identifizieren, und wobei die Steuerung konfiguriert ist, Fernzugriff auf den geschützten Inhalt durch die Fernzugriffsvorrichtung (26) basierend auf dem Ort der Fernzugriffsvorrichtung (26) zu autorisieren.

16. Vorrichtung nach Anspruch 12, wobei die Steuerung konfiguriert ist, Fernzugriff auf den geschützten Inhalt durch die Fernzugriffsvorrichtung (26) basierend auf Teilnehmerprofilinformationen, die mit dem Teilnehmer verbunden sind, zu autorisieren.

17. Vorrichtung nach Anspruch 12, wobei die Steuerung konfiguriert ist, mindestens einen Abschnitt des Autorisierungsprozesses zu mindestens einem von dem Heimnetzwerk (16) und der Heimnetzwerkvorrichtung (18) zu delegieren.

18. Computerlesbares Medium, das Befehle speichert, die bei Ausführung auf einem programmierten Prozessor ein Verfahren ausführen, um Fernzugriff auf DRM-geschützten Inhalt, der an mindestens eine von einer Heimnetzwerkvorrichtung (18) innerhalb eines Heimnetzwerks (16) von einem Internetprotokoll-Multimedia-Subsystem-basierten, IMS-basierten, Internet-Fernsehen- , IPTV, -Dienstanbieternetzwerk (12) bereitgestellt wird, wobei das computerlesbare Medium umfasst:
Befehle zum Empfangen einer Fernzugriffsanforderung für den Fernzugriff auf mindestens einen Abschnitt des DRM-geschützten Inhaltes von einer Fernzugriffsvorrichtung (26), die an dem Heimnetzwerk (16) registriert ist, wobei die Fernzugriffsanforderung von einem entfernten Standort außerhalb des Heimnetzwerks (16) empfangen wird;
Befehle zum Autorisieren des Fernzugriffs durch die Fernzugriffsvorrichtung (26) des DRM-geschützten Inhaltes, der an die Heimnetzwerkvorrichtung (18) bereitgestellt wird, wobei Befehle bei dem computerlesbaren Medium gespeichert werden, das sich bei dem IMS-basierten IPTV-Dienstanbieternetzwerk (12) und außerhalb des Heimnetzwerks (16) befindet; und
Befehle zum Weiterleiten der Fernzugriffsanforderung zu dem Heimnetzwerk (16), wenn die Fernzugriffsanforderung autorisiert wurde,
wobei die Fernzugriffsanforderungsinformationen Befehle umfassen, um zu ermöglichen, dass geschützter Inhalt, der von der Fernzugriffsanforderung angefordert wird, von der Heimnetzwerkvorrichtung (18) in dem Heimnetzwerk (16) zur Fernzugriffsvorrichtung (26) gesendet wird, und
wobei die Fernzugriffsanforderung Befehle umfasst, um Schlüsselaustauschvorgänge zwischen dem Heimnetzwerk (16) und der Fernzugriffsvorrichtung (26) zu ermöglichen, die der Fernzugriffsvorrichtung (26) erlauben, Inhalt zu entschlüsseln, der von der Heimnetzwerkvorrichtung (18) verschlüsselt und zur Fernzugriffsvorrichtung (26) gesendet wird.

19. Computerlesbares Medium nach Anspruch (18), wobei die Befehle zum Erlauben, dass geschützter Inhalt, der von der Fernzugriffsanforderung angefordert wird, von der Heimnetzwerkvorrichtung (18) gesendet werden darf, Befehle umfassen, um die Näherungsautorisierungsanforderungen des Heimnetzwerks (16) auf solche Art und Weise zu lockern, dass Inhalt von der Heimnetzwerkvorrichtung (18) zur Fernzugriffsvorrichtung (26) gesendet werden kann, wenn sich die Fernzugriffsvorrichtung (26) außerhalb des Heimnetzwerks (16) befindet.

20. Computerlesbares Medium nach Anspruch (18), wobei die Befehle zum Autorisieren der Fernzugriffsanforderung auf mindestens einem von DRM-Rechten, die mit dem angeforderten Inhalt verbunden sind, den Bezugsrechten des Teilnehmers, der mit der Heimnetzwerkvorrichtung (18) und der Fernzugriffsvorrichtung (26) verbunden ist, dem entfernten Standort der Fernzugriffsvorrichtung (26), Fähigkeiten der Fernzugriffsvorrichtung (26), und dass sowohl die Fernzugriffsvorrichtung (26) als auch die Heimnetzwerkvorrichtung (18) zu einem gleichen Teilnehmerkonto gehören, basieren.

## Revendications

1. Méthode de contrôle de service pour permettre l'accès à distance de contenus protégés de gestion des droits numériques fourni à au moins l'un d'un dispositif de réseau domestique (18) au sein d'un réseau domestique (16) à partir du réseau du fournisseur de services (12) d'IPTV, de Télévision IP, basé sur IMS, basé sur un sous-système multimédias de protocole Internet, le procédé comprenant les étapes consistant à :
la réception d'une demande d'accès à distance pour un accès à distance, pour au moins une partie de la gestion des droits numériques, DRM, du contenu protégé à partir d'un dispositif d'accès à distance (26) enregistré auprès du réseau domestique (16), dans lequel la demande d'accès à distance est reçue à partir d'un emplacement à distance à l'extérieur du réseau domestique (16) ;
l'autorisation de l'accès à distance, par un dispositif de commande, par le dispositif d'accès à distance (26) du contenu de DRM protégé fourni au dispositif de réseau domestique, dans lequel le dispositif de commande réside sur le réseau du fournisseur de services (12) d'IPTV basé sur IMS et à l'extérieur du réseau domestique (16) ; et
transmission de la demande d'accès à distance au réseau domestique (16) lorsque la demande d'accès à distance a été autorisée,
dans lequel la demande d'accès à distance comprend des instructions pour permettre la transmission du contenu de DRM protégé demandée sollicitée par la demande d'accès à distance à partir du dispositif de réseau domestique (18) dans le réseau domestique (16) vers le dispositif d'accès à distance (26).

2. Procédé selon la revendication 1, dans lequel les instructions pour permettre la transmission d'un contenu protégé sollicité par la demande d'accès à distance à partir du dispositif de réseau domestique (18) comprennent des instructions pour l'assouplissement des exigences d'autorisation de proximité du réseau domestique (16), de telle sorte que le contenu peut être transmis à partir du dispositif de réseau domestique (18) au dispositif d'accès à distance (26) lorsque le dispositif d'accès à distance (26) est situé en dehors du réseau domestique (16).

3. Procédé selon la revendication 1, dans lequel l'autorisation de la demande d'accès à distance est basée sur au moins l'un des droits de DRM associé avec le contenu demandé, les droits de souscription de l'abonné associé au dispositif de réseau domestique (18) et au dispositif d'accès à distance (26), l'emplacement à distance du dispositif d'accès à distance (26), les capacités du dispositif d'accès à distance (26) et à la fois le dispositif d'accès à distance (26) et le dispositif de réseau domestique (18) appartenant au même compte d'abonné.

4. Procédé selon la revendication 1, dans lequel l'étape d'autorisation comprend l'identification de l'emplacement du dispositif d'accès à distance (26).

5. Procédé selon la revendication 1, dans lequel la demande d'accès à distance comprend des instructions pour permettre les échanges principaux entre le réseau domestique (16) et le dispositif d'accès à distance (26) qui permettent au dispositif d'accès à distance (26) de décrypter le contenu crypté et transmis à partir du dispositif de réseau domestique (18) au dispositif d'accès à distance (26).

6. Procédé selon la revendication 1, dans lequel l'étape consistant à autoriser l'accès à distance par le dispositif d'accès à distance (26) est basée sur des informations de profil d'abonné associées à l'abonné.

7. Procédé selon la revendication 1, dans lequel le dispositif de réseau domestique (18) comprend un système DRM qui est configuré pour vérifier que le dispositif d'accès à distance (26) est situé dans le même domaine de réseau domestique que le dispositif de réseau domestique (18), et que le dispositif d'accès à distance (26) est le même dispositif qui a transmis la demande d'accès à distance au réseau du fournisseur de services (12).

8. Procédé selon la revendication 1, dans lequel l'étape d'autorisation comprend la délégation d'au moins une partie de la procédure d'autorisation à l'étape d'autorisation pour au moins du réseau domestique (16) et du dispositif de réseau domestique (18).

9. Procédé selon la revendication 1, dans lequel le réseau domestique (16) comprend une passerelle résidentielle couplée entre le réseau du fournisseur de services (12) d'IPTV basé sur IMS et le dispositif de réseau domestique (18), et dans lequel l'étape d'acheminement comprend la transmission de la demande d'accès à distance à la passerelle résidentielle et la passerelle résidentielle relayant au moins une partie de la demande d'accès à distance au dispositif de réseau domestique (18).

10. Procédé selon la revendication 1, dans lequel la demande d'accès à distance peut comprendre au moins l'une des informations qui identifient le contenu protégé demandé, les informations qui identifient le dispositif d'accès à distance (26), et les informations qui identifient le réseau domestique (16).

11. Procédé selon la revendication 1, dans lequel le réseau du fournisseur de services (12) d'IPTV basé sur IMS comprend un serveur de catalogue couplé au réseau domestique (16) et couplé au dispositif d'accès à distance (26) qui est configuré pour fournir une liste de contenu à partir de laquelle le contenu protégé est sélectionné.

12. Dispositif de contrôle de service pour permettre l'accès à distance à la gestion des droits numériques, DRM, au contenu protégé fourni à au moins l'un d'un dispositif de réseau domestique (18) au sein d'un réseau domestique (16) à partir du réseau du fournisseur de services (12) d'IPTV, de Télévision IP, basé sur IMS, basé sur un sous-système multimédias de protocole Internet, le dispositif de commande de service comprenant :
un dispositif de contrôle configuré pour recevoir des informations de demande d'accès à distance à partir d'un dispositif d'accès à distance (26) situé à l'extérieur du réseau domestique (16) et enregistré auprès du réseau domestique (16), dans lequel les informations de demande d'accès à distance comprennent une demande d'accès à distance au contenu protégé par DRM fourni à le au moins un réseau domestique (18) ; et
un élément de mémoire couplé au dispositif de contrôle pour stocker au moins une partie des informations de demande d'accès à distance reçues par le dispositif de commande de service,
dans lequel le dispositif de contrôle est configuré pour autoriser l'accès à distance du contenu protégé par DRM fourni à au moins l'un du dispositif de réseau domestique (18) par le dispositif d'accès à distance (26), dans lequel en outre le dispositif de commande réside sur le réseau du fournisseur de services (12) d'IPTV basé sur IMS et à l'extérieur du réseau domestique (16),
dans lequel le dispositif de contrôle est configuré pour transférer au moins une partie des informations à distance de demande d'accès au réseau domestique (16) lorsque la demande d'accès à distance a été autorisée, et
dans lequel les informations de demande d'accès à distance comprennent des instructions pour permettre la transmission du contenu protégé demandé par la demande d'accès à distance à partir du dispositif de réseau domestique (18) dans le réseau domestique (16) vers le dispositif d'accès à distance (26).

13. Dispositif selon la revendication 12, dans lequel les instructions pour permettre la transmission d'un contenu protégé demandée par la demande d'accès à distance à partir du dispositif de réseau domestique (18) comprennent des instructions pour l'assouplissement des exigences d'autorisation de proximité du réseau domestique (16), de telle sorte que le contenu peut être transmis à partir du dispositif de réseau domestique (18) au dispositif d'accès à distance (26) lorsque le dispositif d'accès à distance (26) est situé en dehors du réseau domestique (16).

14. Dispositif selon la revendication 12, dans lequel le dispositif de contrôle est configuré pour autoriser l'accès à distance du contenu protégé par le dispositif d'accès à distance (26) basé sur au moins l'un des droits DRM associé avec le contenu demandé, les droits de souscription de l'abonné associé au dispositif de réseau domestique (18) et au dispositif d'accès à distance (26), l'emplacement à distance du dispositif d'accès à distance (26), les capacités du dispositif d'accès à distance (26), et à la fois le dispositif d'accès à distance (26) et le dispositif de réseau domestique (18) appartenant au même compte d'abonné.

15. Dispositif selon la revendication 12, dans lequel le dispositif de contrôle est configuré pour identifier l'emplacement du dispositif d'accès à distance (26), et dans lequel le dispositif de contrôle est configuré pour autoriser l'accès à distance du contenu protégé par le dispositif d'accès à distance (26) sur la base de l'emplacement du dispositif d'accès à distance (26).

16. Dispositif selon la revendication 12, dans lequel le dispositif de contrôle est configuré pour autoriser l'accès à distance du contenu protégé par le dispositif d'accès à distance (26) sur la base des informations de profil d'abonné associées avec l'abonné.

17. Dispositif selon la revendication 12, dans lequel le dispositif de contrôle est configuré pour déléguer au moins une partie de la procédure d'autorisation à au moins l'un du réseau domestique (16) et du dispositif de réseau domestique (18).

18. Support lisible par ordinateur stockant des instructions qui, lors de l'exécution sur un processeur programmé, réalise un procédé pour permettre l'accès à distance à la gestion des droits numériques, DRM, du contenu protégé fourni à au moins l'un d'un dispositif de réseau domestique (18) au sein d'un réseau domestique (16) à partir du réseau du fournisseur de services (12) d'IPTV, de Télévision IP, basé sur IMS, basé sur un sous-système multimédias de protocole Internet, le support lisible par ordinateur comprenant :
des instructions pour la réception d'une demande d'accès à distance pour un accès à distance, pour au moins une partie du contenu protégé de DRM à partir d'un dispositif d'accès à distance (26) enregistré auprès du réseau domestique (16), dans lequel la demande d'accès à distance est reçue à partir d'un emplacement distant à l'extérieur du réseau domestique (16) ;
des instructions pour autoriser l'accès à distance par le dispositif d'accès à distance (26) du contenu protégé de DRM fourni au dispositif de réseau domestique (18), dans lequel des instructions sont stockées dans le support lisible par ordinateur qui réside sur le réseau du fournisseur de services (12) d'IPTV basé sur IMS et à l'extérieur du réseau domestique (16) ; et
des instructions pour la transmission de la demande d'accès à distance au réseau domestique (16) lorsque la demande d'accès à distance a été autorisée,
dans lequel la demande d'accès à distance comprend des instructions pour permettre la transmission d'un contenu protégé demandée par la demande d'accès à distance depuis un dispositif de réseau domestique (18) dans le réseau domestique (16) au dispositif d'accès à distance (26), et
dans lequel la demande d'accès à distance comprend des instructions pour permettre les échanges principaux entre le réseau domestique (16) et le dispositif d'accès à distance (26) qui permettent au dispositif d'accès à distance (26) de décrypter le contenu crypté et transmis à partir du dispositif de réseau domestique (18) au dispositif d'accès à distance (26).

19. Support lisible par ordinateur selon la revendication (18), dans lequel les instructions pour permettre la transmission de contenu protégé demandée par la demande d'accès à distance à partir du dispositif de réseau domestique (18) comprend des instructions pour l'assouplissement des exigences d'autorisation de proximité du réseau domestique (16) d'une telle façon que le contenu peut être transmis à partir du dispositif de réseau domestique (18) au dispositif d'accès à distance (26) lorsque le dispositif d'accès à distance (26) est situé en dehors du réseau domestique (16).

20. Support lisible par ordinateur selon la revendication (18), dans lequel les instruction d'autorisation de la demande d'accès à distance sont basées sur au moins l'un des droits DRM associés avec le contenu demandé, les droits de souscription de l'abonné associé au dispositif de réseau domestique (18) et au dispositif d'accès à distance (26), l'emplacement à distance du dispositif d'accès à distance (26), les capacités du dispositif d'accès à distance (26), et à la fois le dispositif d'accès à distance (26) et le dispositif de réseau domestique (18) appartenant au même compte d'abonné.
